# EUROPEAN PATENT SPECIFICATION

(11) **EP 4 452 612 B1**
(45) Date of publication and mention of the grant of the patent: **29.04.2026**
(21) Application number: 22838953.2
(22) Date of filing: 12.12.2022
(51) Int. Cl.: B29D 30/24, B29D 30/70

(54) **PROCESS AND PLANT FOR BUILDING TYRES FOR VEHICLE WHEELS**
VERFAHREN UND ANLAGE ZUR HERSTELLUNG VON REIFEN FÜR FAHRZEUGRÄDER
PROCÉDÉ ET INSTALLATION DE FABRICATION DE PNEUS POUR ROUES DE VÉHICULE

(30) Priority: 21.12.2021 IT 202100031928
(43) Date of publication of application: 30.10.2024
(73) Proprietor: Pirelli Tyre S.p.A., 20126 Milano (IT)
(72) Inventor: BOIOCCHI, Maurizio, 20126 MILANO (IT); BOSIO, Gian Luigi, 20126 MILANO (IT); BADOLATO, Luigi Antonio, 20126 MILANO (IT); SABBATANI, Enrico, 20126 MILANO (IT)
(74) Representative: Vittorangeli, Lucia
(86) International application number: PCT/IB2022/062052
(87) International publication number: WO 2023/119052

(56) References cited:
- WO-A1-2012/146988
- FR-A1- 2 429 113
- GB-A- 2 253 818

## Description

The present invention relates to a process and a plant for building tyres for vehicle wheels.

In particular, the invention is aimed for manufacturing ultra-high performance tyres, e.g. for race car competitions.

A tyre for vehicle wheels generally comprises a carcass structure comprising at least one carcass ply having respectively opposite terminal flaps engaged with respective anchoring annular structures, integrated in the zones normally identified with the name of "beads", defining the radially inner circumferential edges of the tyre.

The carcass structure is associated with a crown structure comprising at least one belt structure having one or more belt layers, situated in radial superimposition with respect to each other and with respect to the carcass ply, having textile or metallic reinforcement cords with cross orientation and/or substantially parallel to the circumferential extension direction of the tyre. More preferably, the crown structure comprises a belt structure having at least one belt layer and a tread band made of elastomeric material applied in radially outer position to the crown structure.

Respective sidewalls made of elastomeric material are also applied in axially outer position on the lateral surfaces of the carcass structure, each extended from one of the lateral edges of the tread band up to the respective anchoring annular structure. In the tyres of "tubeless" type, an air impermeable cover layer, usually termed "liner", covers the inner surfaces of the tyre.

With the expression "annular assembly" it is intended the crown structure being processed comprising at least the first radially inner belt layer and the second radially outer belt layer having width lower than a width of the first belt layer.

With the expression "shaped annular assembly" it is intended the annular assembly subjected to the action of shaping so that the annular assembly has a convex curved profile in a radial plane with respect to a geometric reference axis.

With the expression "shaped and turned-up annular assembly" it is intended the shaped annular assembly subjected to the turning-up action of the lateral flaps of the first belt layer.

With the expression "crown structure being processed" it is intended at least the shaped annular assembly subjected to the turning-up action of the lateral flaps of the first belt layer.

The terms "radial" and "axial" and the expressions "radially inner/outer" and "axially inner/outer" are used with reference to the radial direction of the tyre (i.e. to a direction perpendicular to the geometric rotation axis of the tyre) and to the axial direction of the tyre (i.e. to a direction parallel to the geometric rotation axis of the tyre).

The terms "circumferential" and "circumferentially" are used with reference to the annular extension of the tyre. A radial plane of the tyre contains the rotation axis of the same.

By "geometric rotation axis" of a tyre being processed (green tyre, tyre component or portion) it is intended the axis corresponding to the geometric rotation axis of the vulcanised tyre when mounted in operating conditions on a respective mounting rim.

With the expression "elastomeric material", it is intended to indicate a composition comprising at least one elastomeric polymer and at least one reinforcement filler. Preferably, such composition also comprises additives such as, for example, a crosslinking agent and/or a plasticising agent. Due to the presence of the crosslinking agent, through heating such material it can be heated such to form the final manufactured item.

By "semifinished product" it is intended a manufactured item prefabricated in strip form (i.e. made before the production of the tyre and generally outside the building plant) in order to form a component of a tyre. The manufactured item is prefabricated with full width. In other words, the semifinished products have a width thereof pre-sized so as to be equal to the width (measured in an axial direction of the tyre) of the component of the tyre that the semifinished product is adapted to form. The manufactured item can also be prefabricated with full length. In another words, the semifinished products can have a length thereof pre-sized in a manner such to be equal to the length (measured in a circumferential direction of the tyre) of the component of the tyre that the semifinished product is adapted to form, plus the possible junctions. The formation of the component of the tyre is generally carried out by circumferential winding of the semifinished product on a substantially cylindrical deposition surface, transverse cut to size of the semifinished product (if it is not already prefabricated with full length) and junction of the ends of the cut semifinished product (butt joint or via superimposition). The pre-fabricated semifinished product is adapted to be stored (e.g. on suitable storage reels) in order to then be used in a tyre production plant. The semifinished product can be made of only elastomeric material or it can be reinforced with at least one cord made of textile and/or metallic and/or hybrid material.

With the expression "continuous elongated element", it is intended a semifinished elementary product having the shape of an elongated manufactured item made of only elastomeric material or comprising at least one cord (made of textile and/or metallic and/or hybrid material) which is extended parallel to the longitudinal extension of the continuous elongated element itself and is incorporated or at least partially coated by at least one layer made of elastomeric material. Preferably, the continuous elongated element is adapted to be coiled on a drum. Preferably the transverse size of the continuous elongated element is comprised between about 1 mm and about 30 mm.

With the expression "fixed transfer station" referred to an element (in particular to a grip ring), it is intended the fact that such element is stably positioned at a point of the plant and does not undergo any spatial movement during all the building steps, in particular in the case of the grip ring when this receives and subsequently transfers a crown structure being processed.

In the document WO 2012/146988 in the name of the same Applicant, the attainment of the crown structure is described, through a process in which an annular assembly is formed on a so-called auxiliary drum comprising a first radially inner belt layer and at least one second radially outer belt layer. Axially opposite terminal portions of the first belt layer are then turned-up on said at least one second belt layer, so as to at least partially superimpose the terminal portions of the first belt layer on said at least one second radially outer belt layer. The belt layers are then transferred on a service drum comprising radially movable sectors, which is adapted to be radially expanded so as to engage the belt structure. The service drum, in the radial expansion condition, can have an outer surface shaped according to a curvilinear cross section profile, so as to set a desired shape to the belt layers engaged thereon. A second part of the belt structure is attained on the service drum by winding circumferentially, according to axially approached turns, at least one reinforcement element made of elastomeric material longitudinally incorporating one or more continuous cords, so as to form an additional belt layer, normally termed "zero-degree layer" in accordance with the orientation of the reinforcement cords with respect to a circumferential direction, useful for the purpose of maintaining the desired cross section profile of the belt structure, also under the effects of high centrifugal forces triggered during use. The deposition of a continuous elongated element made of elastomeric material is then actuated, according to mutually approached turns around the belt structure carried by the service drum, in order to form a tread band having desired shape thickness.

In the document WO2009/081220, a first building drum, an auxiliary drum and a second building drum are provided which can coincide with the first building drum. The auxiliary drum and the second building drum are preferably convex in order to shape the structure of the belt through expansion of the drum itself.

The documents EP1127683, EP0348336A and KR20050055818 show building drums for the belt structure adapted to turn up the ends thereof. EP0348336A shows a convex central portion on which the belt layers are deposited.

The Applicant has observed that the shape of the belt layers confers a suitably curved profile to the layers themselves and to the belt structure in its entirety. The profile acquired by the belt structure coincides with or approaches the desired profile that the belt structure itself must take on, within a mould employed in a subsequent tyre moulding and vulcanisation treatment. The Applicant has also observed that controlling the deposit geometry for the components of the tyre is the aspect that has the most influence on the possibility to control the final shapes of the footprint area, hence the relative performances. Indeed, by approaching the profile of the belt layers to the profile that the belt structure must take on within a vulcanisation mould, it is possible to use cords made of materials having higher mechanical characteristics, and hence stronger, and control the tensions to which the tyre is subjected both during building and during moulding and vulcanisation. In particular the Applicant has observed that limiting the need for adaptation of the tyre to the vulcanisation mould allows limiting the uncontrolled deformations thereof and being able to manage the selection of the characteristics of the materials that constitute the tyre with positive effects on the management of the footprint area and hence of the response of the tyre.

The Applicant has also observed that the shape of the belt layers actuated according to the state of the art encounters several difficulties that are particularly evident in the building of tyres of ultra-high performance sports uses.

With particular reference to ultra-high performance tyres, especially if intended for race car competitions which involve extreme work conditions, the Applicant deems it suitable that the belt layer or layers are attained starting from semifinished products, i.e. manufactured items in strip form with reinforcement cords preferably of textile type (and/or metallic and/or hybrid type), whose axially opposite lateral edges are turned up to at least partially cover the radially more external belt layer.

The Applicant deems particular useful to turn up the ends of the belt layers for performance grounds. Indeed, turning-up the axially opposite flaps of a belt layer on the belt layers that are radially outer thereto imparts a greater responsiveness and response speed of the tyre on getting over a curve.

The Applicant has also been able to observe that in the manufacturing of several models of tyres, the turned-up flaps of one or more of the belt layers are adapted to preserve the carcass structure from possible interferences with the free ends of the reinforcement cords of the belt layers, and from the consequent possibility of slits which would tend to be propagated, damaging the structure of the tyre.

The Applicant has nevertheless observed that the structural schemes described above with reference to tyres for race car competitions contribute to increasing the rigidity of the belt structure in its entirety, obstructing the deformability thereof for the purpose of the shape of the belt layers. These difficulties are further accentuated by the use of reinforcement cords formed by or typically containing fibres of aramid and/or other non-stretchable materials.

The significant increase of the structural rigidity of the belt obstructs the expansion of the sectors of the service drum of the type described in WO 2012/146988, up to render difficult the obtainment of the shape of the belt layers, with the risk of inducing excessive stresses on the structural components of the service drum and/or on the same components of the belt structure.

The Applicant has also observed that the progressive radial expansion of the sectors of the service drum causes, in addition to a corresponding radial expansion of the belt structure, circumferential dilation thereof. This phenomenon typically starts in proximity to the axial middle line plane of the belt structure, where there is the initial contact with the sectors, before then being progressively extended towards the axially outer edges. The reinforcement cords which constitute the belt layers tend to facilitate this radial and circumferential dilation by progressively changing their orientation with respect to the circumferential direction, causing a narrowing of the overall width of the belt structure. In addition, due to the above-described difficulties of expansion, at the end of the shape of the belt layers, the belt structure has an expansion degree that is not constant along the radial section. Such expansion degree in fact varies between a maximum expansion degree (axial middle line plane) and a minimum or zero expansion degree (edges). This different expansion degree induces an "S" shaped deformation of the reinforcement cords and a variation of applied voltage which is minimal or even zero at the edges that can thus be still subjected to adaptations and hence deformations within the vulcanisation mould.

The Applicant has perceived that the above-described dynamics considerably limit the expansion degree that can be reached in the shaping of the belt structure and consequently the possibilities of controlling the final shapes of the footprint area and hence the relative performances.

More particularly, the Applicant has perceived that the sequence of the operations executed during the building of the belt structure can affect the above-described dynamics.

The Applicant has finally found that turning-up the flaps of the first radially inner belt layer on the radially outer belt layer, after having shaped the belt layers, reduces the obstacles to shaping the belt layers, allowing the obtainment of a sufficient expansion degree also at the edges, limiting the variability of such expansion degree and being able to select the materials with mechanical characteristics adapted for sport uses.

In a first aspect, the invention relates to a process for building tyres for vehicle wheels according to claim 1.

The Applicant deems that turning-up the flaps of the first belt layer after having shaped the annular assembly facilitates the shaping of the belt layers so that one can obtain a more uniform expansion degree such to involve the edges as well, without affecting the selection of the materials.

In a second aspect, the invention relates to a plant for building tyres for vehicle wheels according to claim 9.

The Applicant deems that the presence of switching members and turning-up members on the first auxiliary drum allows manufacturing the shape of the annular assembly before the turning-up of the flaps of the first belt layer so as to obtain the abovementioned effects.

The present invention, in accordance with at least one of the aforesaid aspects, can have one or more of the preferred characteristics that are described hereinbelow.

Preferably manufacturing the crown structure comprises e) transferring, from the first auxiliary drum to a second auxiliary drum, a crown structure being processed comprising at least the shaped and turned-up annular assembly, in which said second auxiliary drum defines a radially outer surface arranged around a geometric reference axis and having convex curved profile, in which at the end of the transfer said crown structure being processed is arranged coaxially around said radially outer surface.

Preferably manufacturing the crown structure comprises f) applying at least the tread band around the crown structure being processed associated with the second auxiliary drum in order to complete the crown structure.

Preferably the action a) comprises arranging said first auxiliary drum having shape variable between a cylindrical shape defined by said deposition surface and a toroidal shape defined by a convex surface that is radially expanded with respect to said deposition surface. Preferably the action c) comprises modifying the shape of the first auxiliary drum passing from the cylindrical shape to the toroidal shape and vice versa.

The Applicant deems that using a first auxiliary drum having variable shape allows effectively executing the shaping of the annular assembly, limiting the transfers thereof in a step in which it is subjected to deformations.

Preferably said crown structure building line comprises a second auxiliary drum defining a radially outer surface arranged around a geometric reference axis and having convex curved profile.

Preferably said crown structure building line comprises first building devices configured for manufacturing, on said deposition surface of the first auxiliary drum, an annular assembly comprising at least said first belt layer radially inner having a first width and said second belt layer radially outer having a second width smaller than the first width of the first belt layer.

Preferably said crown structure building line comprises transfer devices configured for transferring from the first auxiliary drum to the second auxiliary drum a crown structure being processed comprising the shaped and turned-up annular assembly and for arranging said crown structure being processed coaxially around the second auxiliary drum.

Preferably said crown structure building line comprises second building devices configured for applying at least one tread band around the crown structure being processed associated with the second auxiliary drum.

Preferably said first auxiliary drum comprises first sectors and second sectors circumferentially alternated around the geometric reference axis and movable between respective radially contracted and radially expanded positions. Preferably the action a) comprises arranging said first auxiliary drum comprising first sectors and second sectors circumferentially alternated around said geometric reference axis and movable between respective radially contracted and radially expanded positions.

Preferably each first sector has a radially outer surface having a rectilinear profile in a radial plane with respect to the geometric reference axis and each second sector has a radially outer surface having a convex curved profile in a radial plane with respect to the geometric reference axis.

Preferably provision is made for arranging said first sectors and said second sectors in respective radial positions such that the assembly of the radially outer surfaces of said first sectors defines said deposition surface.

Preferably the action c) comprises radially expanding said second sectors such that the assembly of the radially outer surfaces of said second sectors defines said convex surface radially expanded.

Preferably said switching members are configured for radially moving said first sectors and said second sectors in respective radial positions such that the assembly of the radially outer surfaces of said first sectors defines said deposition surface and for radially expanding said second sectors such that the assembly of the radially outer surfaces of said second sectors defines said convex surface radially expanded.

Preferably the action e) comprises radially contracting said first sectors and said second sectors and axially unthreading said first auxiliary drum with respect to the crown structure being processed.

The Applicant deems that the use of alternated sectors simplifies the switching of the first auxiliary drum and allows being quickly adapted to the various tyre sizes.

Preferably said transfer devices comprise a grip ring comprising circumferentially distributed circular sectors and configured for externally enclosing said crown structure being processed.

Preferably said circular sectors comprise attraction members configured for exerting on a radially outer surface of the crown structure being processed an attraction force towards circular sectors themselves.

Preferably removing the crown structure being processed by the first auxiliary drum comprises enclosing said crown structure being processed with a grip ring and exerting on a radially outer surface of the crown structure being processed an attraction force towards circumferentially distributed circular sectors of the grip ring.

The Applicant deems that providing for a grip ring with sectors capable of attracting the crown structure being processed, and in particular suctioned sectors, allows effectively manipulating the crown structure being processed in a step in which, in addition to being subjected to possible deformations, it is already shaped.

Preferably said grip ring is arranged in a fixed transfer station.

Preferably removing the crown structure being processed from the first auxiliary drum and arranging it coaxially around the second auxiliary drum occurs in a fixed transfer station.

The Applicant deems that performing the transfer operations in a fixed station, defined by the grip ring, limits the possible misalignments and improves the stable grip of the crown structure being processed in a step in which, in addition to being subjected to possible deformations, it is already shaped.

Preferably the action b) comprises manufacturing, between said first belt layer and said second belt layer, at least one further belt layer having width smaller than the first width of the first belt layer.

Preferably the turning-up action comprises turning up the axially opposite lateral flaps of the first belt layer around respective lateral edges of the second belt layer and of the at least one further belt layer and in radially outer superimposition on the second belt layer.

Preferably, provision is made, before the action f), for applying at least one zero-degree layer in radially outer position to said crown structure being processed.

Preferably applying a zero-degree layer comprises circumferentially winding according to axially approached turns at least one reinforcement element made of elastomeric material, longitudinally incorporating at least one continuous cord.

Preferably said second building devices comprise at least one extruder configured for dispensing a continuous elongated element made of elastomeric material on said second auxiliary drum driven in rotation and suitably moved so as to apply said continuous elongated element according to side-by-side and/or partially laterally superimposed turns.

Preferably the action f) comprises applying a continuous elongated element made of elastomeric material by formation mutually approached and/or partially laterally superimposed turns.

Preferably said first building devices comprise a first supply unit configured for supplying a first semifinished product intended for manufacturing said first belt layer.

Preferably said first building devices comprise a second supply unit configured for supplying a second semifinished product suitable for manufacturing said second belt layer.

Preferably the action b) comprises circumferentially winding around the first auxiliary drum a first semifinished product having said first width and mutually joining opposite ends of the first semifinished product in order to manufacture said first belt layer.

Preferably the action b) comprises circumferentially winding around the first auxiliary drum a second semifinished product having said second width smaller than the first width of the first semifinished product and mutually joining opposite ends of the second semifinished product in order to manufacture said second belt layer.

The Applicant deems that turning-up the flaps of the first belt layer after having shaped the annular assembly is particular adapted for a process in which the belt layers are obtained through deposition of semifinished products and the tread band is obtained by coiling a continuous elongated element made of elastomeric material.

Preferably said first auxiliary drum comprises a central portion axially extended for a first section and two turning-up members respectively arranged at axially opposite ends of the central portion.

Preferably the action a) comprises arranging a first auxiliary drum comprising a central portion axially extended for a first section and two turning-up members respectively arranged at axially opposite ends of the central portion.

Preferably the action b) comprises manufacturing said first belt layer having said first width greater than said first section such that the first belt layer is centred on said central portion and its lateral flaps axially project from the central portion.

Preferably the action b) comprises manufacturing said second belt layer having said second width slightly smaller than said first section such that the second belt layer is centred on said central portion and on said first belt layer.

The Applicant deems that using a first auxiliary drum provided with turning-up members allows effectively executing first the shaping and then the turning-up of the annular assembly, limiting the transfers in a step in which this is subjected to deformations.

Preferably completing the crown structure comprises, before the action the action f), applying an under-layer of the tread band on the zero-degree layer.

Preferably the action f) comprises manufacturing at least one first portion and a second portion of the tread band.

Preferably the crown structure being processed attained on the first auxiliary drum comprises a pair of reinforcement inserts obtained by circumferentially winding a pair of reinforcement belt-like inserts, each radially superimposed on a terminal edge of one of the lateral turned-up ends of the first belt layer.

Further characteristics and advantages will be more evident from the detailed description of a preferred but non-exclusive embodiment of a process and a plant for building tyres for vehicle wheels, in accordance with the present invention.

Such description will be set forth hereinbelow with reference to the enclosed drawings, provided only as a non-limiting example, in which:
- figure 1 shows, in cross section, a tyre obtainable according to the present invention;
- figure 2 schematically shows, in top view, a plant for manufacturing tyres attained in accordance with a preferred embodiment of the present invention;
- figure 3 schematically shows, in top view, a plant for manufacturing tyres attained in accordance with possible preferred embodiment variant of the present invention;
- figures 4a-4f schematically show the actions executed during the building of the crown structure;
- figure 5 and figure 6 schematically show respective front views of a first auxiliary drum used in the plant for manufacturing tyres;
- figure 7 shows a front view of a detail of the first auxiliary drum;
- figure 8A and figure 8B show perspective views respectively of a detail of the first auxiliary drum in two different configurations;
- figures 9 and 10 frontally show the detail respectively of figures 8A and 8B;
- figures 11 and 12 schematically show a detail of the first auxiliary drum not visible in figure 9, respectively according to the trace XI and XII of figure 9;
- figure 13 shows a front view of a grip ring used in the plant for manufacturing tyres;
- figures 14-16 show perspective views of a detail of the grip ring respectively in three different embodiments.

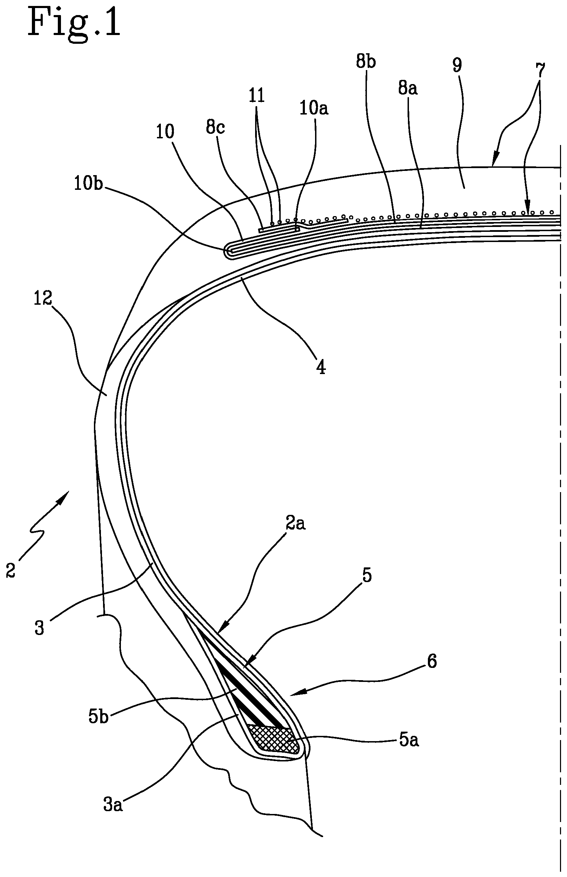

With reference to the abovementioned figures, reference number 1 overall indicates a plant for manufacturing tyres for vehicle wheels, arranged for actuating a process according to the present invention and a manufacturing tyres 2 of the type illustrated in figure 1.

With reference to figure 1, the tyre 2 comprises a carcass structure 2a comprising at least one carcass ply 3. For the sake of description simplicity in the course of the present description, reference will be only as an example to the presence of only one carcass ply 3; nevertheless if necessary two or more carcass plies can also be provided for, depending on the requirements.

The carcass structure 2a can also comprise a layer of impermeable elastomeric material or so-called liner 4 applied inside the carcass ply 3.

Two anchoring annular structures 5, each comprising a so-called bead core 5a bearing an elastomeric filler 5b in radially outer position, are engaged with respective terminal flaps 3a of the carcass ply 3. The anchoring annular structures 5 are integrated in proximity to zones normally identified with the name of "beads" 6, at which there is normally the engagement between the tyre 2 and a respective mounting rim.

In other words, the carcass structure 2a comprises at least one carcass ply 3 having terminal flaps 3a engaged with respective anchoring annular structures 5.

The tyre 2 also comprises a crown structure 7 circumferentially applied around the carcass structure 3.

The crown structure 7 comprises at least one first belt layer 8a, a second belt layer 8b and a tread band 9.

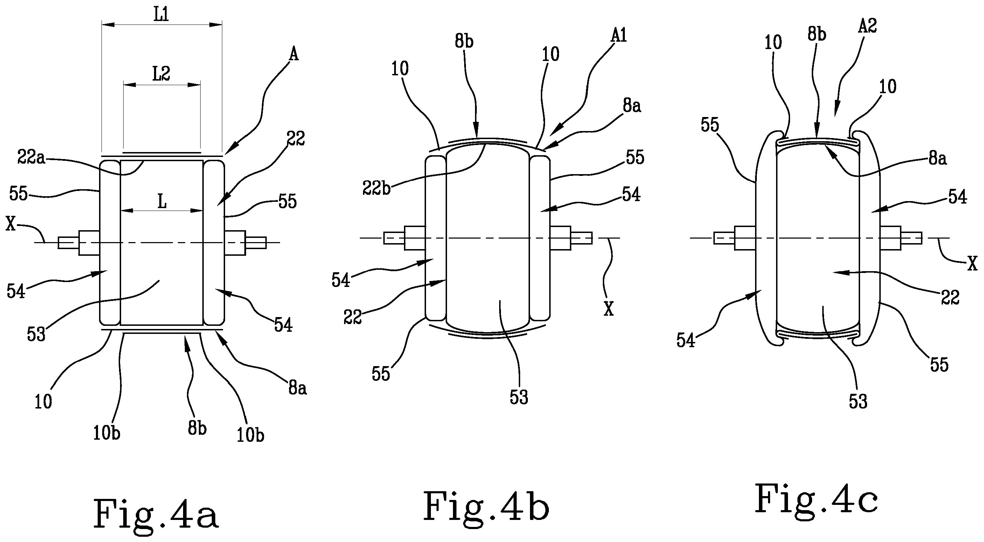

More particularly, in the illustrated example, the following are provided for: a first radially inner belt layer 8a having a first width L1 and a second radially outer belt layer 8b having a second width L2 smaller than the first width L1 (figure 4a).

The first belt layer 8a has axially opposite lateral flaps 10 turned-up around respective lateral edges 10b of the second belt layer 8b and in radially outer superimposition on the second belt layer 8b. In the presence of at least one further belt layer (not illustrated) having width smaller than the first width L1 of the first belt layer 8a and arranged between the first belt layer 8a and the second belt layer 8b, the axially opposite lateral flaps 10 of the first belt layer 8a are turned-up around the respective lateral edges 10b of the second belt layer 8b and of the at least one further belt layer and in radially outer superimposition on the second belt layer 8b.

The crown structure 7 can also comprise a pair of reinforcement belt-like inserts 8c, each radially superimposed on a terminal edge 10a of one of the turned-up lateral ends 10.

At least one so-called zero-degree layer 11 can also be radially superimposed on the belt layers 8a, 8b and on the possible reinforcement belt-like inserts 8c, in order to confer a predetermined resistance to circumferential and radial extensibility. The zero-degree layer 11 is applicable in addition to or in substitution of the reinforcement belt-like inserts 8c.

The tyre 2 also comprises two sidewalls 12, each extended from the corresponding bead 6 to a corresponding lateral edge of the tread band 9.

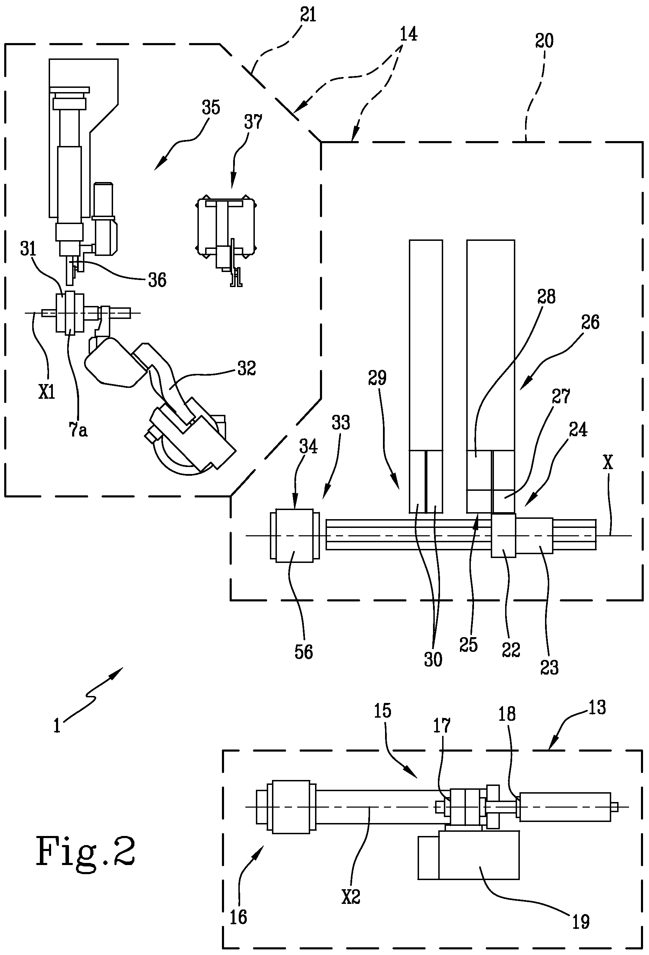

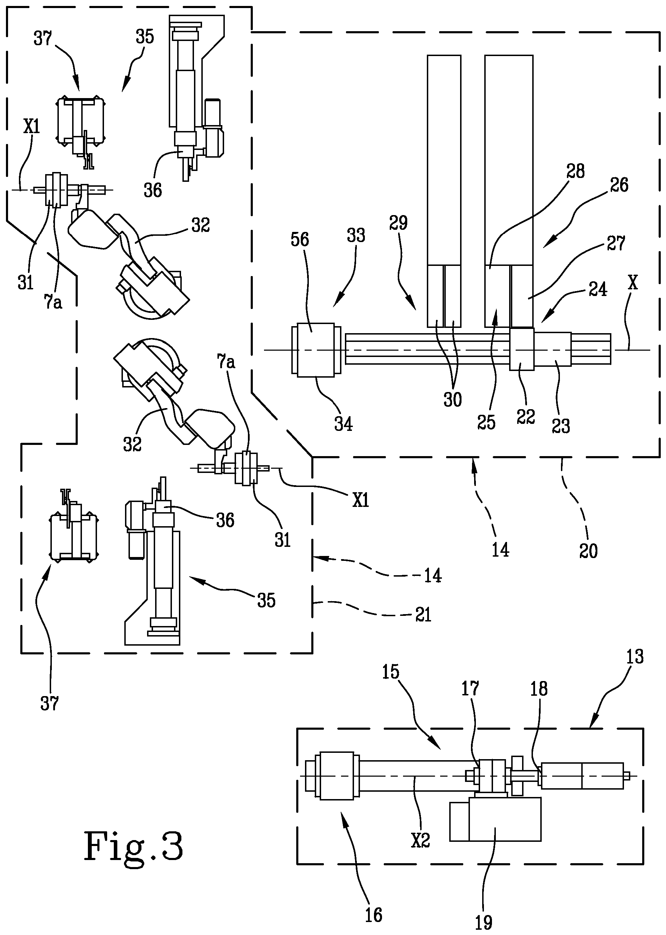

With reference to figure 2 or to the figure 3, the plant 1 comprises a carcass structure building line 13 configured for manufacturing the carcass structures 2a and a crown structure building line 14 configured for manufacturing crown structures 7. The plant 1 also comprises an assembly station 15 in which each crown structure 7 is associated with a respective carcass structure 2a.

Preferably, as in the examples illustrated in figures 2 and 3, the assembly station 15 is operatively integrated in the carcass structure building line 13. In this case the carcass structure building line 13 has a receiving station 16 in which the crown structure 7 is released in order to be associated with the carcass structure 2a.

The carcass structure building line 13 comprises at least one primary drum 17 configured for determining the radial expansion of the carcass structure 2a for the purpose of coupling with the crown structure 7.

The examples illustrated in figures 2 and 3, illustrate a so-called "single-stage process" in which the carcass structure 2a is attained on the primary drum 17 so that the coupling between crown structure 7 and carcass structure 2a does not require transfer operations of the carcass structure 2a from the primary drum 17 on which it was built to another.

In this case the primary drum 17 can be operatively supported by a mandrel 18 or another device which allows if necessary actuating it in rotation and/or moving it suitably along an axis X2 thereof between one or more work units 19 during the application of the components of the carcass structure 2a.

More particularly, the primary drum 17 is adapted to first receive the possible liner 4, optionally pre-assembled with the sidewalls 12, and subsequently the carcass ply 3, so as to form a cylindrical sleeve on whose axially opposite lateral flaps 3a the anchoring annular structures 5 are then fit. Subsequently, the turning-up of the lateral flaps 3a of the carcass ply 3 around the anchoring annular structures 5 can be carried out. In addition, there can be the application of at least one anti-abrasive element depending on the building process.

Alternatively, the carcass structure building line 13 comprises a further drum, not illustrated, on which the carcass structure 2a is built which is subsequently fit on the primary drum 17, which in such case thus represents a second phase drum or so-called "shaping drum".

In both described cases, in order to be associated with the respective carcass structure 2a, the crown structure 7 is carried into radially outer position with respect to the primary drum 17 and duly centred with the carcass structure 2a already present thereon. In both described cases, the assembly station 15 thus coincides with a position of the primary drum 17.

In the crown structure building line 14, at least one first work area 20 and at least one second work area 21 are preferably identifiable.

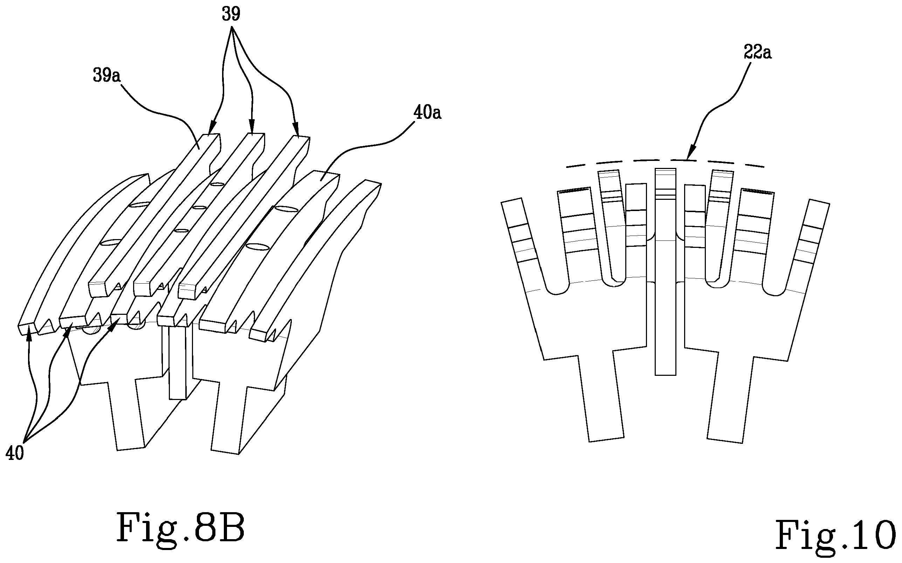

At the first work area 20, a first auxiliary drum 22 operates which has a deposition surface 22a (figures 4a and 10) arranged radially external around a geometric reference axis X and has cylindrical shape.

The auxiliary drum 22 can be supported by a carriage 23 so as to be able to around the geometric reference axis X. The carriage 23 is movable in order to position the first auxiliary drum 22 selectively in front of at least one first work station 24 and a second respectively spaced work station 25. The carriage 23 is movable preferably parallel to the geometric reference axis X and preferably along a rectilinear guide.

At the first work area 20 operate first building devices 26 configured for manufacturing on the deposition surface 22a of the first auxiliary drum 22 an annular assembly A comprising at least the first radially inner belt layer 8a and the second radially outer belt layer 8b having the second width L2 smaller than the first width L1 of the first belt layer 8a.

The first building devices 26 comprise:
- a first supply unit 27 operating at the first work station 24 and configured for supplying a first semifinished product intended to manufacture the first belt layer 8a, and
- a second supply unit 28 operating at the second work station 25 and configured for supplying a second semifinished product adapted for manufacturing the second belt layer 8b.

The first semifinished product is a manufactured item in strip form made of elastomeric material having the first width L1 and comprising parallel cords approached to each other and oriented according to a predetermined angle, preferably comprised between about 55° and about 70°, with respect to the longitudinal extension of the manufactured item itself.

The second semifinished product is a manufactured item in strip form made of elastomeric material having the second width L2 and comprising parallel cords approached to each other and oriented according to a predetermined angle, preferably comprised between about 55° and about 70°, with respect to the longitudinal extension of the manufactured item itself, and having cross orientation with respect to the cords of the first semifinished product.

As will be further described hereinbelow, the first auxiliary drum 22 is configured for shaping the annular assembly A according to a convex curved profile in a radial plane with respect to the geometric reference axis X, so as to obtain a shaped annular assembly A1, and for subjecting the shaped annular assembly A1 to a turning-up action in order to obtain a shaped and turned-up annular assembly A2 in which the lateral flaps 10 of the first belt layer 8a are turned-up around the respective lateral edges 10b of the second belt layer 8b superimposed on the second belt layer 8b.

At the first work area 20, a third work station 29 can also be provided in which a third supply unit 30 operates which is configured for supplying a third semifinished product suitable for manufacturing the pair of reinforcement belt-like inserts 8c.

The third semifinished product is a manufactured item in strip form made of elastomeric material. Each reinforcement strip-like insert 8c incorporates cords, preferably textile, for example with nylon base, extended longitudinally.

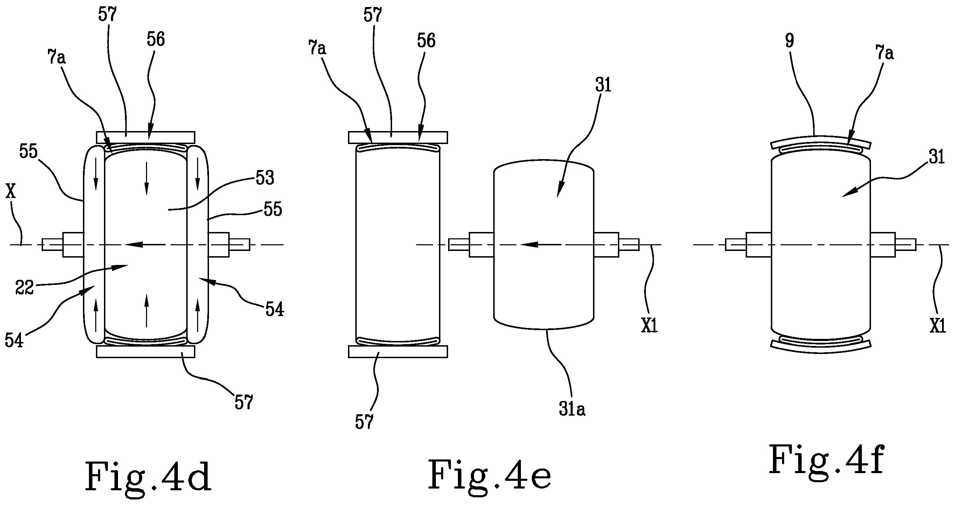

At the second work area 21, at least one second auxiliary drum 31 operates, defining a radially outer surface 31a (figure 4e) arranged around a geometric reference axis X1 and having convex curved profile.

The second auxiliary drum 31 is preferably engaged with a robotic arm 32, preferably of anthropomorphic type. With reference to figure 2, a second auxiliary drum 31 is provided together with a respective robotic arm 32 and with reference to figure 3, two second auxiliary drums 31 are provided for, equivalent to or different from each other, together with two respective robotic arms 32 for example for actuating in the second work area 21 the simultaneous building of crown structures 7 belonging to separate tyres.

The robotic arm 32, for example of the type with six or more rotation axes, is capable of supporting, actuating in rotation and suitably moving the second auxiliary drum 31 in the second work area 21 for the purpose of attaining the tread band 9 and, if necessary, further components of the crown structure 7, such as for example zero-degree layer, under-layer of the tread band, etc..

For the transfer from the first auxiliary drum 22 to the second auxiliary drum 31 of a crown structure being processed 7a comprising at least the shaped and turned-up annular assembly A2, a transfer station 33 is provided for that is operatively interposed between the first work area 20 and the second work area 21. In the transfer station 33, transfer devices 34 operate that are configured for transferring, from the first auxiliary drum 22 to the second auxiliary drum 31, the crown structure being processed 7a.

Preferably the transfer station 33 is fixed.

At the second work area 21, second building devices 35 operate that are configured for applying at least one tread band 9 around the crown structure being processed 7a associated with the second auxiliary drum 31.

The second building devices 35 comprise at least one extruder 36 or another member configured for dispensing a continuous elongated element made of elastomeric material on the second auxiliary drum 31 driven in rotation and suitably moved by the robotic arm 32, so as to determine the deposition of the continuous elongated element by formation of mutually side-by-side and/or partially laterally superimposed turns up to completing the formation of the tread band 9 with desired shape and thickness.

With reference to figure 2, an extruder 36 is provided and with reference to figure 3 two extruders 36 are provided that can be used for forming the same portion of the tread band 9 or a first and a second portion of the tread band 9 with different composition materials.

At the second work area 21, a winding device 37 can also be provided for which is configured for dispensing, on the second auxiliary drum 31, a reinforcement element made of elastomeric material longitudinally incorporating one or more continuous cords while the second auxiliary drum 31 is driven in rotation and suitably moved by the robotic arm 32 in front of the winding device itself.

The reinforcement element wound circumferentially according to axially approached turns around the belt layers 8a, 8b defines the zero-degree layer 11.

With reference to figure 2, a winding device 37 is provided and with reference to figure 3, two winding devices 37 are provided. At the second work area 21, further dispensing members can also be provided for, in order to form further components of the tyre.

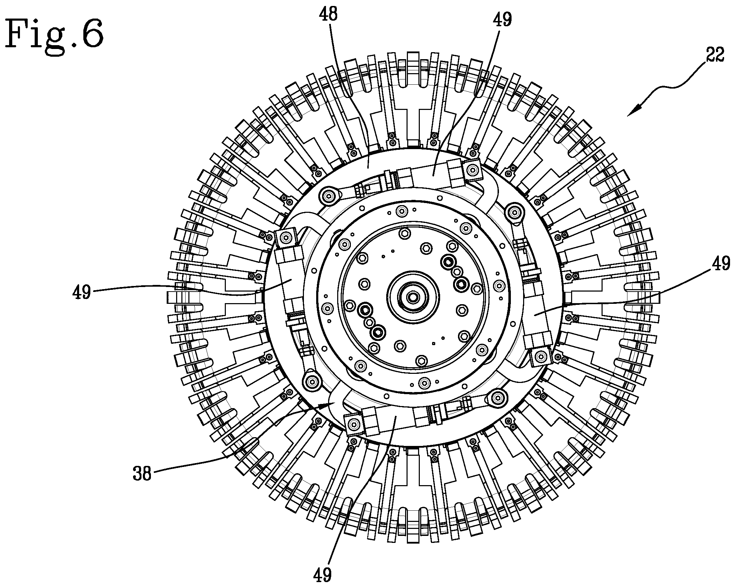

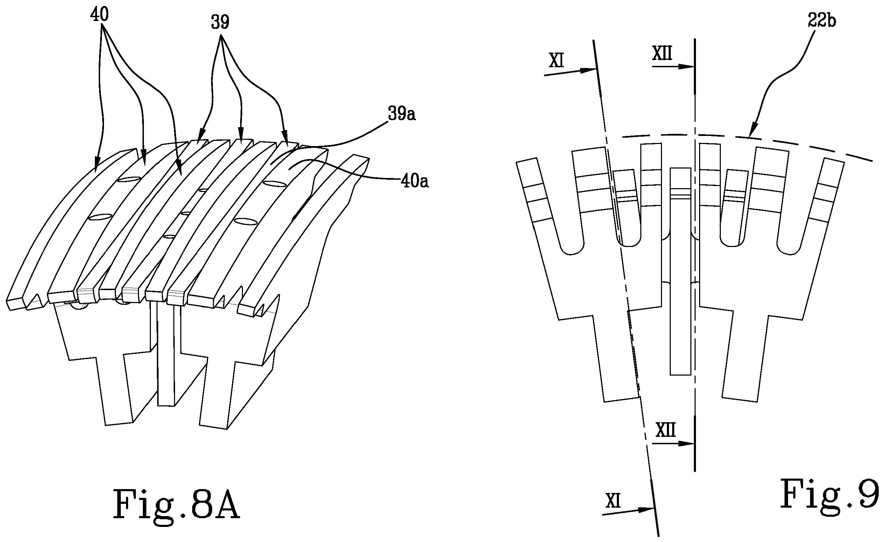

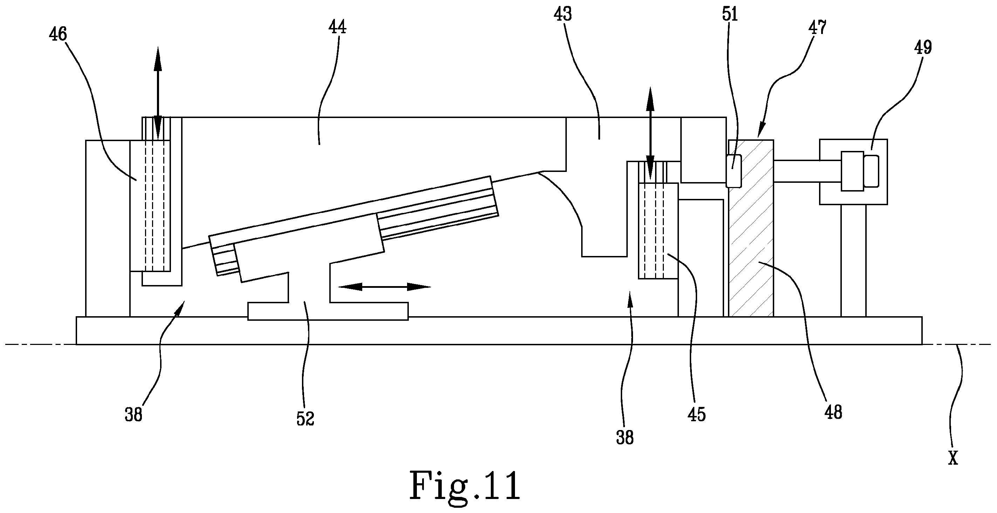

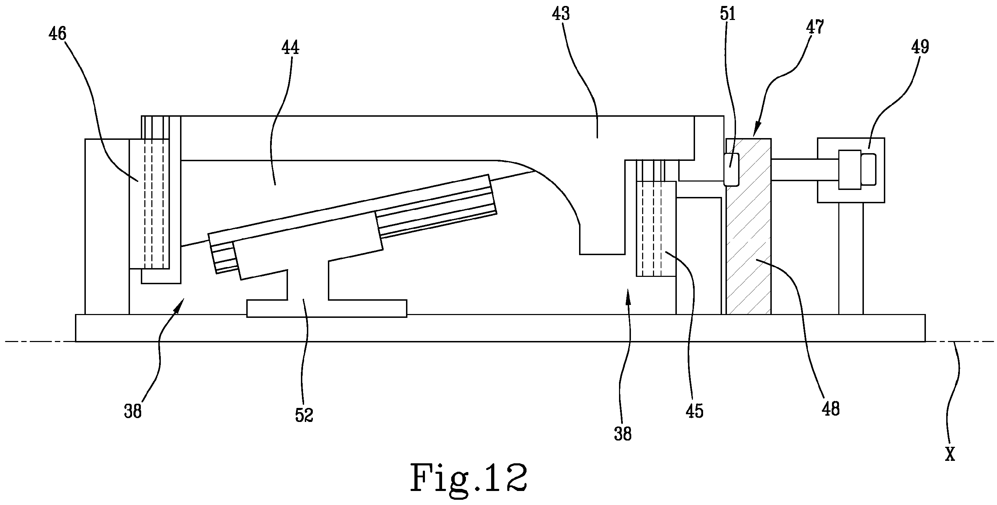

With reference to figures 4-12, the first auxiliary drum 22 will now be described having shape variable between a cylindrical shape defined by the deposition surface 22a and a toroidal shape defined by a convex surface 22b (figure 4b and figure 9) that is radially expanded with respect to the deposition surface 22a (figures 4a and 4b).

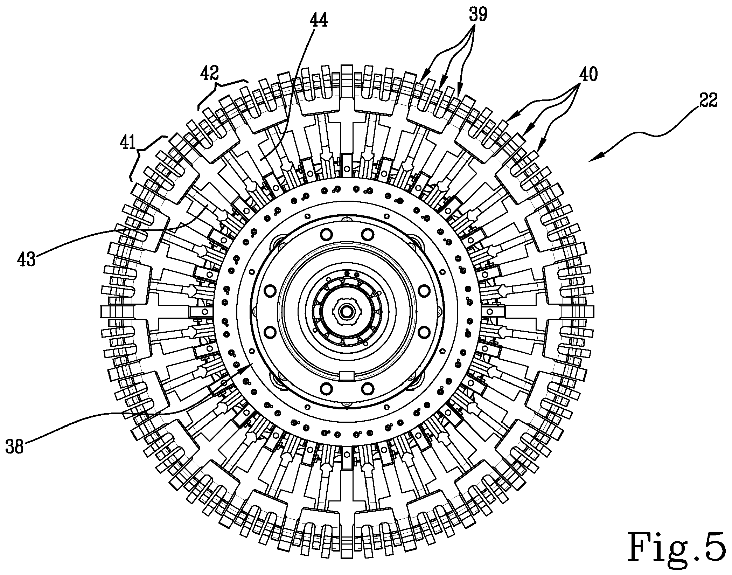

The first auxiliary drum 22 comprises switching members 38 (figures 5-6) configured for modifying the shape of the first auxiliary drum 22 passing from the cylindrical shape to the toroidal shape, and vice versa.

The first auxiliary drum 22 comprising first sectors 39 and second sectors 40 circumferentially alternated around the geometric reference axis X and movable between respective radially contracted and radially expanded positions.

Each first sector 39 has a radially outer surface 39a having a rectilinear profile in a radial plane with respect to the geometric reference axis X (figures 8A-8B).

Each second sector 40 has a radially outer surface 40a having a convex curved profile in a radial plane with respect to the geometric reference axis X (figures 8A-8B).

The switching members 38 are configured for radially moving the first sectors 39 and the second sectors 40 in respective radial positions such that the assembly of the radially outer surfaces 39a of the first sectors 39 defines the deposition surface 22a and the assembly of the radially outer surfaces 40a of the second expanded sectors 40 defines the convex surface 22b that is radially expanded with respect to the deposition surface 22a.

As is for example illustrated in figure 5, preferably the first sectors 39 and the second sectors 40 are grouped in respective groups 41 and 42 comprising three sectors each. The three first sectors and the three second sectors of each group 41 and 42 are associated respectively with a first support 43 and second support 44. The first supports 43 and the second supports 44 are circumferentially alternated around geometric reference axis X in a manner such that a circumferentially outer sector of one group is inserted between two sectors of the circumferentially consecutive group.

The switching members 38 are preferably associated with each support in order to move it radially. The switching members 38 can comprise a first radial guide 45 and a second radial guide 46 arranged on axially opposite sides of the first auxiliary drum 22 on which respectively the first supports 43 and the second supports 44 are slidably mounted.

The switching members 38 also comprise one or more actuators configured for setting the radial sliding motion on the respective first supports 43 and second supports 44.

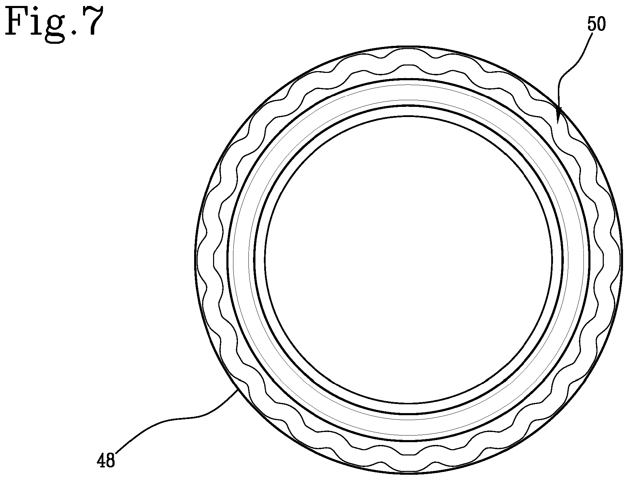

The actuators can for example comprise a cam mechanism 47 preferably comprising a disc 48 actuatable in reciprocating rotation around the geometric reference axis X by one or more cylinders 49 and having a slide profile 50 (figure 7) for a plurality of sliders 51, each for example integral with a first support 43. The actuators can for example comprise a plurality of slides 52, each defining a slidable tilted plane for example with respect to a second support 44. Each slide 52 is axially movable through a cylinder, an electromechanical actuation, a cam system, a screw-nut screw actuation or another actuation type configured for manufacturing an axial rectilinear motion of each slide 52. The presence of the tilted plane associates, with an axial sliding of each slide 52, a radial movement in expansion or in contraction of the respective second support 44 along the radial guide 46.

As is for example illustrated in figures 4a-4d, preferably, the first auxiliary drum 22 comprises a central portion 53, which is axially extended for a first section L, and two turning-up members 54 respectively arranged at axially opposite ends of the central portion 53 and configured for executing the turning-up action.

The central portion 53 has shape variable between the cylindrical shape and the toroidal shape as described above. Preferably the central portion 53 is defined by the first sectors 39 and by the second sectors 40 as described above.

Each turning-up member 54 comprises a chamber 55 that is inflatable and/or deformable on command of a thrust system, partially or totally integrated in the same first auxiliary drum 22, for example a system with pressurised gas introduction, a mechanical deformation system or a mixed system.

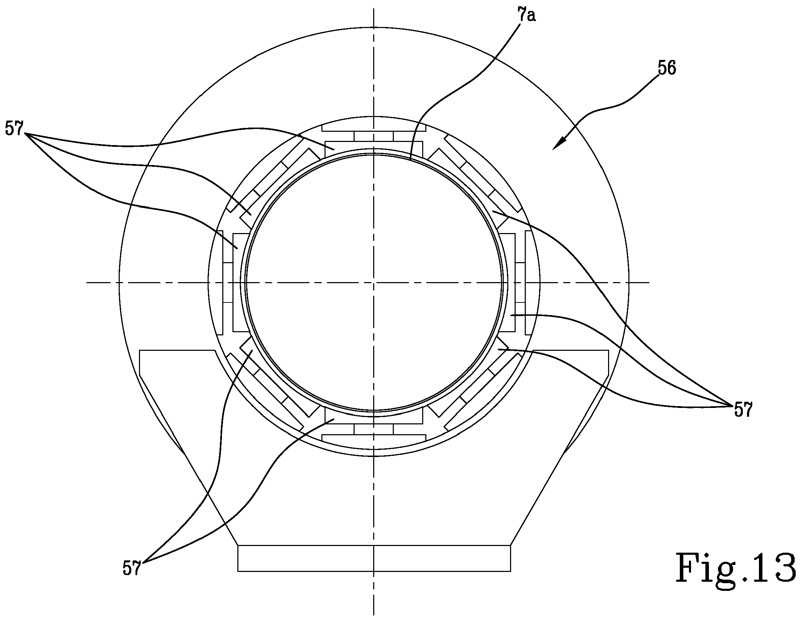

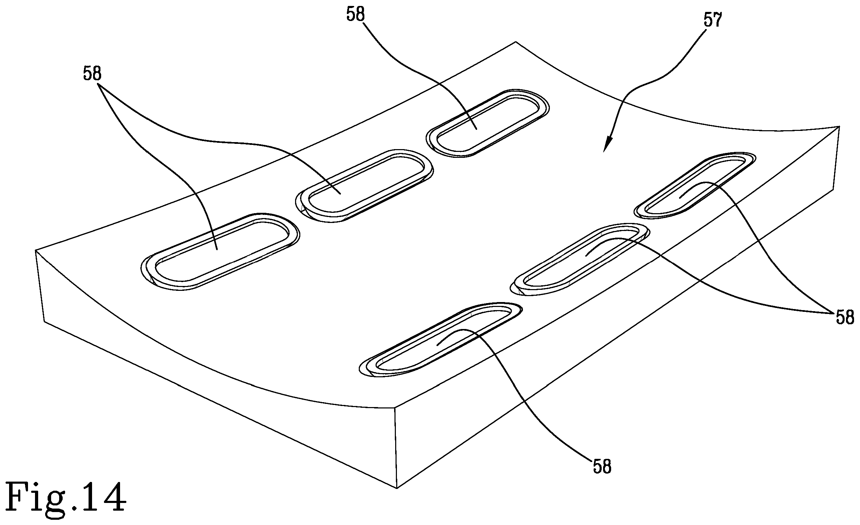

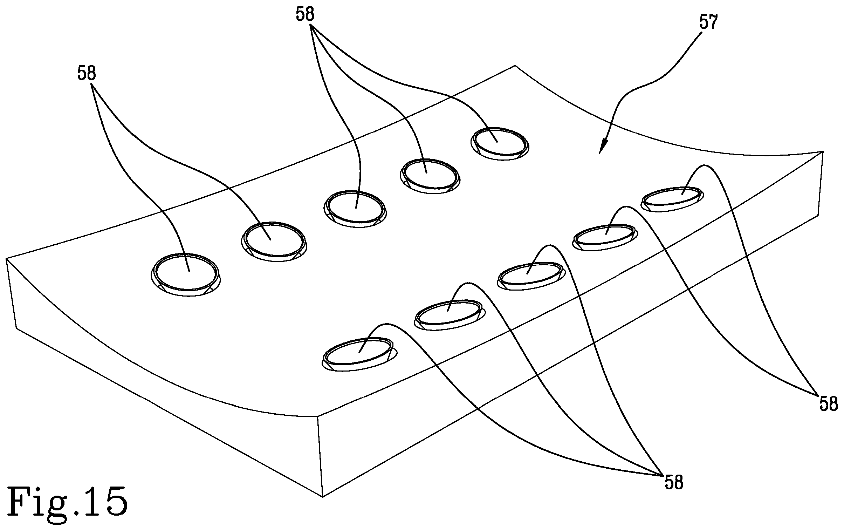

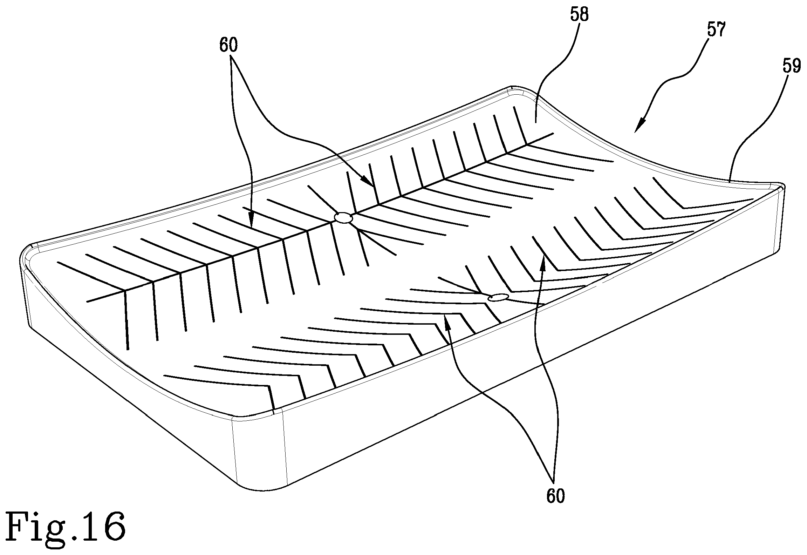

With reference to the transfer devices 34, a grip ring 56 is preferably provided for, defining the fixed transfer station 33. The grip ring 56 (figures 13-16) comprises circular sectors 57 that are circumferentially distributed and configured for externally enclosing the crown structure being processed 7a. The circular sectors 57 comprise attraction members configured for exerting, on a radially outer surface of the crown structure being processed 7a, an attraction force towards circular sectors themselves. The attraction members comprise for example one or more suckers 58 operating by suction, preferably with oval or circular shape, or the entire surface of the circular sector 57 which defines a single sucker 58 due to the presence of a gasket 59 along the edges and the distribution grooves 60 made on the surface of the circular sector 57.

During use, the above-described plant is adapted to implement a process for building tyres 2 for vehicle wheels, comprising manufacturing the carcass structure 2a, manufacturing a crown structure 7 and associating the crown structure 7 in radially outer position with the carcass structure 2a in order to build a green tyre 2.

As is for example illustrated in figure 4a, in order to manufacture the crown structure 7, provision is made for executing an action a) in which the first auxiliary drum 22 is arranged having the deposition surface 22a arranged radially external around the geometric reference axis X. Preferably the first auxiliary drum 22 has shape variable between the cylindrical shape and the toroidal shape, as described above, and is initially arranged in the cylindrical shape. Still more preferably the first auxiliary drum 22 is of the type comprising the first sectors 39 and the second sectors 40 described above, so that the action a) comprises arranging the first sectors 39 and the second sectors 40 in respective radial positions such that the assembly of the radially outer surfaces 39a of the first sectors 39 defines the deposition surface 22a. It is further preferable that the first drum comprise the central portion 53 defined by the first sectors 39, and by the second sectors 40, and the two turning-up members 54 as described above.

The cylindrical shape of the first auxiliary drum 22 is adapted for attaining the annular assembly A by deposition on the deposition surface 22a of the first belt layer 8a having the first width L1 and of the second belt layer 8b having the second width L2 smaller than the first width L1 of the first belt layer 8a (action b)).

Preferably, the carriage 23 arranges the first auxiliary drum 22 in the first work station 24. The first semifinished product having the first width L1 is dispensed by the first supply unit 27 and wound around the first auxiliary drum 22, driven in rotation so as to form the first belt layer 8a wound for a complete revolution around the first auxiliary drum 22 itself. At the end of the winding, the first semifinished product, if it is not already arranged in sections, is cut transversely and the ends of the first belt layer 8a thus formed are mutually joined. Preferably the first belt layer 8a is attained centred on the central portion 53 of the first auxiliary drum 22 and has the first width L1 greater than the first section L so that its lateral flaps 10 axially project from the central portion 53, falling on the turning-up members 54.

Subsequently the carriage 23 arranges the first auxiliary drum 22 in the second work station 25. The second semifinished product having the second width L2 is wound around the first belt layer 8a in a manner analogous to the latter, so as to form the second belt layer 8b wound for a complete revolution around the first auxiliary drum 22. Preferably the second belt layer 8b is attained centred on the central portion 53 and on the first belt layer 8a and has the second width L2 slightly smaller than the first section L.

Preferably the action b) can comprise manufacturing at least the further belt layer as described above between the first belt layer 8a and the second belt layer 8b. In this case the annular assembly A comprises in radial sequence the first belt layer 8a, the further belt layer and the second belt layer 8b.

As is for example illustrated in figure 4b, after having attained the annular assembly A, an action c) is executed in which, while the annular assembly A is associated with the first auxiliary drum 22, the annular assembly A is shaped according to a convex curved profile in a radial plane with respect to the geometric reference axis X in order to obtain the shaped annular assembly A1. Preferably, the action c) comprises modifying the shape of the first auxiliary drum 22 passing from the cylindrical shape to the toroidal shape and vice versa. Still more preferably, in the case of the first sectors 39 and of the second sectors 40, the action c) comprises radially expanding the second sectors 40 such that the assembly of their radially outer surfaces 40a defines the convex surface 22b that is radially expanded with respect to the deposition surface 22a.

As is for example illustrated in figure 4c, after having obtained the shaped annular assembly A1 and while the latter is associated with the first auxiliary drum 22, an action d) is executed in which the shaped annular assembly A1 is subjected to a turning-up action in order to obtain a shaped and turned-up annular assembly A2. Such turning-up action comprises turning up the axially opposite lateral flaps 10 of the first belt layer 8a, around the respective lateral edges 10b of the second belt layer 8b (and possibly of the further belt layer), and in radially outer superimposition on the second belt layer 8b. Such turning-up action is executed by activating the turning-up members 54 and in particular the respective chamber 55.

The turning-up operation can be executed upon movement of the carriage 23 in order to position the first auxiliary drum 22 in a turning-up position laterally spaced from the first work station 24 and from the second work station 25 in order to prevent mechanical interferences between the members set for the formation of the belt layers 8a, 8b and the turning-up members. After the turning-up action, an action of dispensing the reinforcement belt-like inserts 8c can be provided for. Preferably the carriage 23 arranges the first auxiliary drum 22 in the third work station 29 and the third supply unit 30 supplies the reinforcement belt-like inserts 8c around the belt layer or layers 8a, 8b that were previously formed. The reinforcement belt-like inserts 8c can be dispensed simultaneously at the turned-up lateral flaps 10 while the first auxiliary drum 22 is driven in rotation in order to determine the winding thereof according to a complete revolution. At the end of the winding, each of the reinforcement belt-like inserts 8c is transversely cut, if it is not already arranged in sections, and joined at the respective ends.

Once the processing has been completed in the first work area 20, the building of the crown structure 7 continues in the second work area 21. For such purpose, an action e) is provided in which the crown structure being processed 7a is transferred from the first auxiliary drum 22 to the second auxiliary drum 31 by removing the crown structure being processed 7a from the first auxiliary drum 22 and releasing it coaxially around the second auxiliary drum 31 (figures 4d and 4e). Such transfer occurs in the transfer station 33, preferably fixed, reached from the first auxiliary drum 22 by an axial movement of the carriage 23.

The first auxiliary drum 22 is in fact movable along the geometric rotation axis X thereof upon command of the carriage 23, in order to be inserted coaxially in the grip ring 56.

The circular sectors 57 of the grip ring 56 engage the crown structure being processed 7a, externally enclosing it while on a radially outer surface of the crown structure being processed 7a an attraction force is exerted towards the circular sectors themselves (figure 4d) e.g. by actuating the sucker(s) 58.

The first sectors 39 and the second sectors 40 are radially contracted such that it is possible to axially unthread the first auxiliary drum 22 with respect to the crown structure being processed 7a retained by the grip ring.

The second auxiliary drum 31 is in turn adapted to be translated along the geometric reference axis X1 thereof, upon command of the robotic arm 32, in order to be coaxially inserted in the grip ring carrying the crown structure being processed 7a (figure 4e). The second auxiliary drum 31, comprising for example radially movable sectors (not illustrated), is adapted to be radially expanded so as to engage the crown structure being processed 7a.

After the expansion of the second auxiliary drum 31, the circular sectors 57 of the grip ring 56 are radially moved away from the crown structure being processed 7a, which remains engaged to the second auxiliary drum 31.

Through the robotic arm 32, the second auxiliary drum 31 is then axially translated in order to be removed from the grip ring 56 together with the crown structure being processed 7a.

The robotic arm 32 supports, actuations in rotation and moves the second auxiliary drum 31 in the second work area 21 in order to execute an action f) in which at least the tread band 9 is applied around the crown structure being processed 7a associated with the second auxiliary drum 31 in order to complete the crown structure 7 (figure 4f).

Preferably the action f) is executed by applying a continuous elongated element made of mutually approached and/or partially laterally superimposed turns while the second auxiliary drum 31 rotates and is moved in front of the extruder 36.

Before the action f), it is possible to apply at least one zero-degree layer 11 in radially outer position at the crown structure being processed 7a, preferably circumferentially winding according to axially approached turns at least one reinforcement element made of elastomeric material, longitudinally incorporating at least one continuous cord.

In accordance with several possible embodiments, before the action f) it is possible to apply an under-layer of the tread band for example on the zero-degree layer.

Preferably the action f) comprises manufacturing at least one first portion and one second portion of the tread band.

## Claims

1. Process for building tyres (2) for vehicle wheels, comprising:
manufacturing a carcass structure (2a), wherein said carcass structure (2a) comprises at least one carcass ply (3) having terminal flaps (3a) engaged with respective anchoring annular structures (5);
manufacturing a crown structure (7), wherein said crown structure (7) comprises at least one first belt layer (8a), a second belt layer (8b) and a tread band (9);
associating the crown structure (7) in radially outer position with the carcass structure (2a) for building a green tyre; **characterized in that** manufacturing the crown structure (7) comprises:
a) arranging a first auxiliary drum (22) having a deposition surface (22a) arranged radially external around geometric reference axis (X) and having cylindrical shape;
b) manufacturing, on said deposition surface (22a) of the first auxiliary drum (22), an annular assembly (A) comprising at least said first belt layer (8a) radially inner having a first width (L1) and said second belt layer (8b) radially outer having a second width (L2) smaller than the first width (L1) of the first belt layer (8a);
c) while the annular assembly (A) is associated with the first auxiliary drum (22), shaping the annular assembly (A) according to a convex curved profile in a radial plane with respect to the geometric reference axis (X) in order to obtain a shaped annular assembly (A1);
d) while the shaped annular assembly (A1) is associated with the first auxiliary drum (22), subjecting the shaped annular assembly (A1) to a turning-up action in order to obtain a shaped and turned-up annular assembly (A2), wherein the turning-up action comprises turning up axially opposite lateral flaps (10) of the first belt layer (8a), around respective lateral edges (10b) of the second belt layer (8b), and in radially outer superimposition on the second belt layer (8b).

2. Process for building tyres for vehicle wheels according to claim 1, wherein the action a) comprises arranging said first auxiliary drum (22) having shape variable between a cylindrical shape defined by said deposition surface (22a) and a toroidal shape defined by a convex surface (22b) that is radially expanded with respect to said deposition surface (22a) and wherein the action c) comprises modifying the shape of the first auxiliary drum (22) passing from the cylindrical shape to the toroidal shape and vice versa.

3. Process for building tyres for vehicle wheels according to claim 2, wherein the action a) comprises:
arranging said first auxiliary drum (22) comprising first sectors (39) and second sectors (40) circumferentially alternated around said geometric reference axis (X) and movable between respective radially contracted and radially expanded positions,
wherein each first sector (39) has a radially outer surface (39a) having a rectilinear profile in a radial plane with respect to the geometric reference axis (X) and wherein each second sector (40) has a radially outer surface (40a) having a convex curved profile in a radial plane with respect to the geometric reference axis (X);
arranging said first sectors (39) and said second sectors (40) in respective radial positions such that the assembly of the radially outer surfaces (39a) of said first sectors (39) defines said deposition surface (22a).

4. Process for building tyres for vehicle wheels according to claim 3, wherein the action c) comprises radially expanding said second sectors (40) such that the assembly of the radially outer surfaces (40a) of said second sectors (40) defines said convex surface (22b) radially expanded.

5. Process for building tyres for vehicle wheels according to one or more of the preceding claims, wherein the action b) comprises manufacturing, between said first belt layer (8a) and said second belt layer (8b), at least one further belt layer having width smaller than the first width (L1) of the first belt layer (8a), and wherein the turning-up action comprises turning up the axially opposite lateral flaps (10) of the first belt layer (8a) around respective lateral edges (10b) of the second belt layer (8b) and of the at least one further belt layer and in radially outer superimposition on the second belt layer (8b).

6. Process for building tyres for vehicle wheels according to one or more of the preceding claims, wherein:
the action a) comprises arranging a first auxiliary drum (22) comprising a central portion (53) axially extended for a first section (L) and two turning-up members (54) respectively arranged at axially opposite ends of the central portion (53),
the action b) comprises:
- manufacturing said first belt layer (8a) having said first width (L1) greater than said first section (L) such that the first belt layer (8a) is centred on said central portion (53) and its lateral flaps (10) axially project from the central portion (53),
- manufacturing said second belt layer (8b) having said second width (L2) slightly smaller than said first section (L) in a manner such that the second belt layer (8b) is centred on said central portion (53) and on said first belt layer (8a).

7. Process for building tyres for vehicle wheels according to one or more of the preceding claims, wherein provision is made for e) transferring, from the first auxiliary drum (22) to a second auxiliary drum (31), a crown structure being processed (7a) comprising at least the shaped and turned-up annular assembly (A2), and wherein said second auxiliary drum (31) defines a radially outer surface (31a) arranged around a geometric reference axis (X1) and having convex curved profile, where at the end of the transfer, said crown structure being processed (7a) is arranged coaxially around said radially outer surface (31a).

8. Process for building tyres for vehicle wheels according to claim 7, wherein provision is made for f) applying at least the tread band (9) around the crown structure being processed (7a) associated with the second auxiliary drum (31) in order to complete the crown structure (7).

9. Plant (1) for building tyres (2) for vehicle wheels comprising:
a carcass structure building line (13) configured for manufacturing carcass structures (2a) each comprising at least one carcass ply (3) having terminal flaps (3a) engaged with respective anchoring annular structures (5);
a crown structure building line (14) configured for manufacturing crown structures (7) each comprising at least one first belt layer (8a), a second belt layer (8b) and a tread band (9);
an assembly station (15) wherein each crown structure (7) is associated with one of the carcass structures (2a);
**characterized in that** said crown structure building line (14) comprises:
a first auxiliary drum (22) having shape variable between a cylindrical shape defined by a deposition surface (22a) arranged radially external around a geometric reference axis (X) and a toroidal shape defined by a convex surface (22b) that is radially expanded with respect to said deposition surface (22a), wherein said first auxiliary drum (22) comprises switching members (38) configured for modifying the shape of the first auxiliary drum (22) passing from the cylindrical shape to the toroidal shape, and vice versa in order to obtain a shaped annular assembly (A1) comprising said first belt layer (8a) radially inner and said second belt layer (8b) radially outer, and wherein said first auxiliary drum (22) comprises turning up members (54) configured for executing a turning-up action while said shaped annular assembly (A1) is associated with the first auxiliary drum (22) in order to obtain a shaped and turned-up annular assembly (A2), said turning-up action comprising turning up lateral flaps (10) of the first belt layer (8a), around respective lateral edges (10b) of the second belt layer (8b), superimposed on the second belt layer (8b).

10. Plant (1) for building tyres for vehicle wheels according to claim 9, wherein said first auxiliary drum (22) comprises first sectors (39) and second sectors (40) circumferentially alternated around the geometric reference axis (X) and movable between respective radially contracted and radially expanded positions, wherein each first sector (39) has a radially outer surface (39a) having a rectilinear profile in a radial plane with respect to the geometric reference axis (X) and wherein each second sector (40) has a radially outer surface (40a) having a convex curved profile in a radial plane with respect to the geometric reference axis (X);
and wherein said switching members (38) are configured for radially moving said first sectors (39) and said second sectors (40) in respective radial positions such that the assembly of the radially outer surfaces (39a) of said first sectors (39) defines said deposition surface (22a) and for radially expanding said second sectors (40) such that the assembly of the radially outer surfaces (40a) of said second sectors (40) defines said convex surface (22b) radially expanded.

11. Plant (1) for building tyres for vehicle wheels according to claim 9 or 10, wherein said first auxiliary drum (22) comprises a central portion (53) axially extended for a first section (L) and two turning-up members (54) respectively arranged at axially opposite ends of the central portion (53).

12. Plant (1) for building tyres for vehicle wheels according to one or more of the claims from 9 to 11, wherein a second auxiliary drum (31) is provided, defining a radially outer surface (31a) arranged around a geometric reference axis (X1) and having convex curved profile.

13. Plant (1) for building tyres for vehicle wheels according to one or more of the claims from 9 to 12, wherein first building devices (26) are provided, configured for manufacturing, on said deposition surface (22a) of the first auxiliary drum (22), an annular assembly (A) comprising at least said first belt layer (8a) radially inner having a first width (L1) and said second belt layer (8b) radially outer having a second width (L2) smaller than the first width (L1) of the first belt layer (8a).

14. Plant (1) for building tyres for vehicle wheels according to one or more of the claims from 9 to 13, wherein second building devices (35) are provided, configured for applying at least one tread band (9) around the crown structure being processed (7a) associated with the second auxiliary drum (31).

15. Plant (1) for building tyres for vehicle wheels according to claim 12, wherein transfer devices (34) are provided, configured for transferring, from the first auxiliary drum (22) to the second auxiliary drum (31), a crown structure being processed (7a) comprising a shaped and turned-up annular assembly (A2) and for arranging said crown structure being processed (7a) coaxially around the second auxiliary drum (31), wherein said transfer devices (34) comprise a grip ring (56) comprising circular sectors (57) that are circumferentially distributed and configured for externally enclosing said crown structure being processed (7a), wherein said circular sectors (57) comprise attraction members configured for exerting, on a radially outer surface of the crown structure being processed (7a), an attraction force towards circular sectors themselves and wherein said grip ring (56) is arranged in a fixed transfer station (33).

## Patentansprüche

1. Verfahren zum Fertigen von Reifen (2) für Fahrzeugräder, umfassend:
Herstellen einer Karkassenstruktur (2a), wobei die Karkassenstruktur (2a) mindestens eine Karkassenlage (3) umfasst, die Endfelgenbänder (3a) aufweist, die mit jeweiligen ringförmigen Verankerungsstrukturen (5) in Eingriff stehen;
Herstellen einer Laufstreifenstruktur (7), wobei die Laufstreifenstruktur (7) mindestens eine erste Gürtelschicht (8a), eine zweite Gürtelschicht (8b) und ein Laufflächenband (9) umfasst;
Verbinden der Gürtelstruktur (7) in radial äußerer Position mit der Karkassenstruktur (2a) zum Fertigen eines Reifenrohlings;
**dadurch gekennzeichnet, dass** das Herstellen der Laufstreifenstruktur (7) umfasst:
a) Anordnen einer ersten Hilfstrommel (22), die eine Abscheidungsoberfläche (22a) aufweist, die radial außen um eine geometrische Referenzachse (X) angeordnet ist und eine zylindrische Form aufweist;
b) Herstellen, auf der Abscheidungsoberfläche (22a) der ersten Hilfstrommel (22), einer ringförmigen Baugruppe (A), umfassend mindestens die erste Gürtelschicht (8a) radial innen, die eine erste Breite (L1) aufweist, und die zweite Gürtelschicht (8b) radial außen, die eine zweite Breite (L2) aufweist, die kleiner als die erste Breite (L1) der ersten Gürtelschicht (8a) ist;
c) während die ringförmige Baugruppe (A) mit der ersten Hilfstrommel (22) verbunden ist, Formen der ringförmigen Baugruppe (A) gemäß einem konvexen gekrümmten Profil in einer radialen Ebene in Bezug auf die geometrische Referenzachse (X), um eine geformte ringförmige Baugruppe (A1) zu erhalten;
d) während die geformte ringförmige Baugruppe (A1) mit der ersten Hilfstrommel (22) verbunden ist, Aussetzen der geformten ringförmigen Baugruppe (A1) einer Umschlagaktion, um eine geformte und umgeschlagene ringförmige Baugruppe (A2) zu erhalten, wobei die Umschlagaktion das axiale Umschlagen gegenüberliegender seitlicher Felgenbänder (10) der ersten Gürtelschicht (8a) um jeweilige seitliche Kanten (10b) der zweiten Gürtelschicht (8b) und in radial äußerer Überlagerung auf der zweiten Gürtelschicht (8b) umfasst.

2. Verfahren zum Fertigen von Reifen für Fahrzeugräder nach Anspruch 1, wobei die Aktion a) das Anordnen der ersten Hilfstrommel (22) umfasst, die eine Form aufweist, die zwischen einer zylindrischen Form, die durch die Abscheidungsoberfläche (22a) definiert ist, und einer toroidalen Form, die durch eine konvexe Oberfläche (22b) definiert ist, die radial in Bezug auf die Abscheidungsoberfläche (22a) expandiert ist, veränderlich ist, und wobei die Aktion c) ein Modifizieren der Form der ersten Hilfstrommel (22) umfasst, wobei von der zylindrischen Form in die toroidale Form und umgekehrt übergegangen wird.

3. Verfahren zum Fertigen von Reifen für Fahrzeugräder nach Anspruch 2, wobei die Aktion a) umfasst:
Anordnen der ersten Hilfstrommel (22), umfassend erste Sektoren (39) und zweite Sektoren (40), die um die geometrische Referenzachse (X) umlaufend alterniert und zwischen jeweiligen radial zusammengezogenen und radial expandierten Positionen bewegbar sind, wobei jeder erste Sektor (39) eine radial äußere Außenoberfläche (39a) aufweist, die ein geradliniges Profil in einer radialen Ebene in Bezug auf die geometrische Referenzachse (X) aufweist, und wobei jeder zweite Sektor (40) eine radial äußere Außenoberfläche (40a) aufweist, die ein konvex gekrümmtes Profil in einer radialen Ebene in Bezug auf die geometrische Referenzachse (X) aufweist;
Anordnen der ersten Sektoren (39) und der zweiten Sektoren (40) in jeweiligen radialen Positionen derart, dass die Baugruppe der radial äußeren Oberflächen (39a) der ersten Sektoren (39) die Abscheidungsoberfläche (22a) definiert.

4. Verfahren zum Fertigen von Reifen für Fahrzeugräder nach Anspruch 3, wobei die Aktion c) das radiale Expandieren der zweiten Sektoren (40) derart umfasst, dass die Baugruppe der radial äußeren Oberflächen (40a) der zweiten Sektoren (40) die konvexe Oberfläche (22b) radial expandiert definiert.

5. Verfahren zum Fertigen von Reifen für Fahrzeugräder nach einem oder mehreren der vorstehenden Ansprüche, wobei die Aktion b) das Herstellen, zwischen der ersten Gürtelschicht (8a) und der zweiten Gürtelschicht (8b), mindestens einer weiteren Gürtelschicht umfasst, die eine Breite aufweist, die kleiner als die erste Breite (L1) der ersten Gürtelschicht (8a) ist, und wobei die Umschlagaktion das Umschlagen der axial gegenüberliegenden seitlichen Felgenbänder (10) der ersten Gürtelschicht (8a) um jeweilige seitliche Kanten (10b) der zweiten Gürtelschicht (8b) und der mindestens einen weiteren Gürtelschicht und in radial äußerer Überlagerung auf der zweiten Gürtelschicht (8b) umfasst.

6. Verfahren zum Fertigen von Reifen für Fahrzeugräder nach einem oder mehreren der vorstehenden Ansprüche, wobei:
die Aktion a) das Anordnen einer ersten Hilfstrommel (22) umfasst, umfassend einen zentralen Abschnitt (53), der sich axial über einen ersten Bereich (L) erstreckt, und zwei Umschlagglieder (54), die jeweils an axial gegenüberliegenden Enden des zentralen Abschnitts (53) angeordnet sind,
die Aktion b) umfasst:
- Herstellen der ersten Gürtelschicht (8a), die die erste Breite (L1) aufweist, die größer als der erste Abschnitt (L) ist, derart, dass die erste Gürtelschicht (8a) auf dem zentralen Abschnitt (53) zentriert ist und ihre seitlichen Felgenbänder (10) axial von dem zentralen Abschnitt (53) vorstehen,
- Herstellen der zweiten Gürtelschicht (8b), die die zweite Breite (L2) aufweist, die geringfügig kleiner als der erste Abschnitt (L) ist, derart, dass die zweite Gürtelschicht (8b) auf dem zentralen Bereich (53) und auf der ersten Gürtelschicht (8a) zentriert ist.

7. Verfahren zum Fertigen von Reifen für Fahrzeugräder nach einem oder mehreren der vorstehenden Ansprüche, wobei vorgesehen ist: e) Übertragen, von der ersten Hilfstrommel (22) zu einer zweiten Hilfstrommel (31), einer Laufstreifenstruktur (7a), die verarbeitet wird, umfassend mindestens die geformte und umgeschlagene ringförmige Baugruppe (A2),und wobei die zweite Hilfstrommel (31) eine radial äußere Oberfläche (31a) definiert, die um eine geometrische Referenzachse (X1) angeordnet ist und ein konvex gekrümmtes Profil aufweist, wobei am Ende der Übertragung die Laufstreifenstruktur (7a), die verarbeitet wird, koaxial um die radial äußere Oberfläche (31a) angeordnet ist.

8. Verfahren zum Fertigen von Reifen für Fahrzeugräder nach Anspruch 7, wobei vorgesehen ist: f) Aufbringen mindestens des Laufstreifenbandes (9) um die Gürtelstruktur (7a), die verarbeitet wird, die mit der zweiten Hilfstrommel (31) verbunden ist, um die Gürtelstruktur (7) zu vervollständigen.

9. Anlage (1) zum Fertigen von Reifen (2) für Fahrzeugräder, umfassend:
eine Karkassenstrukturfertigungslinie (13), die zum Herstellen von Karkassenstrukturen (2a) konfiguriert ist, jeweils umfassend mindestens eine Karkassenlage (3), die Endfelgenbänder (3a) aufweist, die mit jeweiligen ringförmigen Verankerungsstrukturen (5) in Eingriff stehen;
eine Laufstreifenstrukturfertigungslinie (14), die zum Herstellen von Laufstreifenstrukturen (7) konfiguriert ist, jeweils umfassend mindestens eine erste Gürtelschicht (8a), eine zweite Gürtelschicht (8b) und ein Laufflächenband (9);
eine Zusammenbaustation (15), wobei jede Laufstreifenstruktur (7) mit einer der Karkassenstrukturen (2a) verbunden ist;
**dadurch gekennzeichnet, dass** die Laufstreifenstrukturfertigungslinie (14) umfasst:
eine erste Hilfstrommel (22), die eine Form aufweist, die zwischen einer zylindrischen Form, die durch eine Abscheidungsoberfläche (22a) definiert ist, die radial außen um eine geometrische Referenzachse (X) angeordnet ist, und einer toroidalen Form, die durch eine konvexe Oberfläche (22b) definiert ist, die radial in Bezug auf die Abscheidungsoberfläche (22a) expandiert ist, veränderlich ist, wobei die erste Hilfstrommel (22) Schaltglieder (38) umfasst, die zum Modifizieren der Form der ersten Hilfstrommel (22) durch Übergehen von der zylindrischen Form in die toroidale Form und umgekehrt konfiguriert sind, um eine geformte ringförmige Baugruppe (A1) zu erhalten, umfassend die erste Gürtelschicht (8a) radial innen und die zweite Gürtelschicht (8b) radial außen, und wobei die erste Hilfstrommel (22) Umschlagglieder (54) umfasst, die zum Ausführen einer Umschlagaktion konfiguriert sind, während die geformte ringförmige Baugruppe (A1) mit der ersten Hilfstrommel (22) verbunden ist, um eine geformte und umgeschlagene ringförmige Baugruppe (A2) zu erhalten, die Umschlagaktion umfassend das Umschlagen von seitlichen Felgenbändern (10) der ersten Gürtelschicht (8a) um jeweilige seitliche Kanten (10b) der zweiten Gürtelschicht (8b), die auf der zweiten Gürtelschicht (8b) überlagert sind.

10. Anlage (1) zum Fertigen von Reifen für Fahrzeugräder nach Anspruch 9, wobei die erste Hilfstrommel (22) erste Sektoren (39) und zweite Sektoren (40) umfasst, die um die geometrische Referenzachse (X) umlaufend alterniert und zwischen jeweiligen radial zusammengezogenen und radial expandierten Positionen bewegbar sind, wobei jeder erste Sektor (39) eine radial äußere Außenoberfläche (39a) aufweist, die ein geradliniges Profil in einer radialen Ebene in Bezug auf die geometrische Referenzachse (X) aufweist, und wobei jeder zweite Sektor (40) eine radial äußere Außenoberfläche (40a) aufweist, die ein konvex gekrümmtes Profil in einer radialen Ebene in Bezug auf die geometrische Referenzachse (X) aufweist;
und wobei die Schaltglieder (38) zum radialen Bewegen der ersten Sektoren (39) und die zweiten Sektoren (40) in jeweilige radiale Positionen derart, dass die Baugruppe der radial äußeren Oberflächen (39a) der ersten Sektoren (39) die Abscheidungsoberfläche (22a) definiert, und zum radialen Expandieren der zweiten Sektoren (40) derart konfiguriert sind, dass die Baugruppe der radial äußeren Oberflächen (40a) der zweiten Sektoren (40) die konvexe Oberfläche (22b) radial expandiert definiert.

11. Anlage (1) zum Fertigen von Reifen für Fahrzeugräder nach Anspruch 9 oder 10, wobei die erste Hilfstrommel (22) einen zentralen Abschnitt (53), der axial für einen ersten Bereich (L) erstreckt ist, und zwei Umschlagglieder (54) umfasst, die jeweils an axial gegenüberliegenden Enden des zentralen Abschnitts (53) angeordnet sind.

12. Anlage (1) zum Fertigen von Reifen für Fahrzeugräder nach einem oder mehreren der Ansprüche 9 bis 11, wobei eine zweite Hilfstrommel (31) bereitgestellt ist, die eine radial äußere Oberfläche (31a) definiert, die um eine geometrische Referenzachse (X1) angeordnet ist und ein konvex gekrümmtes Profil aufweist.

13. Anlage (1) zum Fertigen von Reifen für Fahrzeugräder nach einem oder mehreren der Ansprüche 9 bis 12, wobei erste Fertigungsvorrichtungen (26) bereitgestellt sind, die zum Herstellen, auf der Abscheidungsoberfläche (22a) der ersten Hilfstrommel (22), einer ringförmigen Baugruppe (A) konfiguriert sind, umfassend mindestens die erste Gürtelschicht (8a) radial innen, die eine erste Breite (L1) aufweist, und die zweite Gürtelschicht (8b) radial außen, die eine zweite Breite (L2) aufweist, die kleiner als die erste Breite (L1) der ersten Gürtelschicht (8a) ist.

14. Anlage (1) zum Fertigen von Reifen für Fahrzeugräder nach einem oder mehreren der Ansprüche 9 bis 13, wobei zweite Fertigungsvorrichtungen (35) bereitgestellt sind, die zum Anbringen mindestens eines Laufflächenbandes (9) um die Laufstreifenstruktur (7a) konfiguriert sind, die verarbeitet wird, die mit der zweiten Hilfstrommel (31) verbunden ist.

15. Anlage (1) zum Fertigen von Reifen für Fahrzeugräder nach Anspruch 12, wobei Übertragungsvorrichtungen (34) bereitgestellt sind, die zum Übertragen, von der ersten Hilfstrommel (22) zu der zweiten Hilfstrommel (31), einer Laufstreifenstruktur (7a), die verarbeitet wird, umfassend eine geformte und umgeschlagene ringförmige Baugruppe (A2), und zum Anordnen der Laufstreifenstruktur (7a), die verarbeitet wird, koaxial um die zweite Hilfstrommel (31) konfiguriert sind, wobei die Übertragungsvorrichtungen (34) einen Greifring (56) umfassen, umfassend kreisförmige Sektoren (57), die umlaufend verteilt und zum äußerlichen Umschließen der Laufstreifenstruktur (7a) konfiguriert sind, die verarbeitet wird, wobei die kreisförmigen Sektoren (57) Anziehungselemente umfassen, die zum Ausüben, auf eine radial äußere Außenoberfläche der Laufstreifenstruktur (7a), die verarbeitet wird, einer Anziehungskraft in Richtung der kreisförmigen Sektoren selbst konfiguriert sind, und wobei der Greifring (56) in einer festen Übertragungsstation (33) angeordnet ist.

## Revendications

1. Procédé de fabrication de pneumatiques (2) pour des roues de véhicule, comprenant :
la fabrication d'une structure de carcasse (2a), dans lequel ladite structure de carcasse (2a) comprend au moins un pli de carcasse (3) ayant des bandes de jante d'extrémité (3a) en prise avec des structures annulaires d'ancrage (5) respectives ;
la fabrication d'une structure de sommet (7), dans lequel ladite structure de sommet (7) comprend au moins une première couche de ceinture (8a), une seconde couche de ceinture (8b) et une bande de roulement (9) ;
l'association de la structure de sommet (7) dans une position radialement externe à la structure de carcasse (2a) pour la fabrication d'un pneumatique cru ; **caractérisé en ce que** la fabrication de la structure de sommet (7) comprend :
a) la disposition d'un premier tambour auxiliaire (22) ayant une surface de dépôt (22a) disposée radialement externe autour d'un axe de référence géométrique (X) et ayant une forme cylindrique ;
b) la fabrication, sur ladite surface de dépôt (22a) du premier tambour auxiliaire (22), d'un ensemble annulaire (A) comprenant au moins ladite première couche de ceinture (8a) radialement interne ayant une première largeur (L1) et ladite seconde couche de ceinture (8b) radialement externe ayant une seconde largeur (L2) inférieure à la première largeur (L1) de la première couche de ceinture (8a) ;
c) pendant que l'ensemble annulaire (A) est associé au premier tambour auxiliaire (22), le façonnage de l'ensemble annulaire (A) selon un profil incurvé convexe dans un plan radial par rapport à l'axe de référence géométrique (X) afin d'obtenir un ensemble annulaire façonné (A1) ;
d) pendant que l'ensemble annulaire façonné (A1) est associé au premier tambour auxiliaire (22), la soumission de l'ensemble annulaire façonné (A1) à une action de retournement afin d'obtenir un ensemble annulaire façonné et retourné (A2), dans lequel l'action de retournement comprend le retournement de bandes de jante latérales (10) axialement opposées de la première couche de ceinture (8a), autour de bords latéraux (10b) respectifs de la seconde couche de ceinture (8b), et en superposition radialement externe sur la seconde couche de ceinture (8b).

2. Procédé de fabrication de pneumatiques pour des roues de véhicule selon la revendication 1, dans lequel l'action a) comprend la disposition dudit premier tambour auxiliaire (22) ayant une forme variable entre une forme cylindrique définie par ladite surface de dépôt (22a) et une forme toroïdale définie par une surface convexe (22b) qui s'étend radialement par rapport à ladite surface de dépôt (22a) et dans lequel l'action c) comprend la modification de la forme du premier tambour auxiliaire (22) en passant de la forme cylindrique à la forme toroïdale et vice versa.

3. Procédé de fabrication de pneumatiques pour des roues de véhicule selon la revendication 2, dans lequel l'action a) comprend :
la disposition dudit premier tambour auxiliaire (22) comprenant des premiers secteurs (39) et des seconds secteurs (40) alternés circonférentiellement autour dudit axe de référence géométrique (X) et pouvant se déplacer entre des positions respectives radialement contractée et radialement étendue, dans lequel chaque premier secteur (39) a une surface radialement externe (39a) ayant un profil rectiligne dans un plan radial par rapport à l'axe de référence géométrique (X) et dans lequel chaque second secteur (40) a une surface radialement externe (40a) ayant un profil incurvé convexe dans un plan radial par rapport à l'axe de référence géométrique (X) ;
la disposition desdits premiers secteurs (39) et desdits seconds secteurs (40) dans des positions radiales respectives de telle sorte que l'ensemble des surfaces radialement externes (39a) desdits premiers secteurs (39) définisse ladite surface de dépôt (22a).

4. Procédé de fabrication de pneumatiques pour des roues de véhicule selon la revendication 3, dans lequel l'action c) comprend l'extension radiale desdits seconds secteurs (40) de telle sorte que l'ensemble des surfaces radialement externes (40a) desdits seconds secteurs (40) définisse ladite surface convexe (22b) radialement étendue.

5. Procédé de fabrication de pneumatiques pour des roues de véhicule selon l'une ou plusieurs des revendications précédentes, dans lequel l'action b) comprend la fabrication, entre ladite première couche de ceinture (8a) et ladite seconde couche de ceinture (8b), d'au moins une autre couche de ceinture ayant une largeur inférieure à la première largeur (L1) de la première couche de ceinture (8a), et dans lequel l'action de retournement comprend le retournement des bandes de jante latérales (10) axialement opposées de la première couche de ceinture (8a) autour de bords latéraux (10b) respectifs de la seconde couche de ceinture (8b) et de l'au moins une autre couche de ceinture et en superposition radialement externe sur la seconde couche de ceinture (8b).

6. Procédé de fabrication de pneumatiques pour des roues de véhicule selon l'une ou plusieurs des revendications précédentes, dans lequel :
l'action a) comprend la disposition d'un premier tambour auxiliaire (22) comprenant une partie centrale (53) étendue axialement sur une première section (L) et deux éléments de retournement (54) respectivement disposés au niveau d'extrémités axialement opposées de la partie centrale (53),
l'action b) comprend :
- la fabrication de ladite première couche de ceinture (8a) ayant ladite première largeur (L1) plus grande que ladite première section (L) de telle sorte que la première couche de ceinture (8a) soit centrée sur ladite partie centrale (53) et que ses bandes de jante latérales (10) fassent saillie axialement de la partie centrale (53),
- la fabrication de ladite seconde couche de ceinture (8b) ayant ladite seconde largeur (L2) légèrement plus petite que ladite première section (L) de telle sorte que la seconde couche de ceinture (8b) soit centrée sur ladite partie centrale (53) et sur ladite première couche de ceinture (8a).

7. Procédé de fabrication de pneumatiques pour des roues de véhicule selon l'une ou plusieurs des revendications précédentes, dans lequel il est prévu de e) transférer, à partir du premier tambour auxiliaire (22) vers un second tambour auxiliaire (31), une structure de sommet en cours de traitement (7a) qui comprend au moins l'ensemble annulaire façonné et retourné (A2), et dans lequel ledit second tambour auxiliaire (31) définit une surface radialement externe (31a) disposée autour d'un axe de référence géométrique (X1) et ayant un profil incurvé convexe, dans lequel, à la fin du transfert, ladite structure de sommet en cours de traitement (7a) est disposée coaxialement autour de ladite surface radialement externe (31a).

8. Procédé de fabrication de pneumatiques pour des roues de véhicule selon la revendication 7, dans lequel il est prévu de f) appliquer au moins la bande de roulement (9) autour de la structure de sommet en cours de traitement (7a) associée au second tambour auxiliaire (31) afin de compléter la structure de sommet (7).

9. Installation (1) de fabrication de pneumatiques (2) pour des roues de véhicule comprenant :
une ligne de fabrication de structure de carcasse (13) conçue pour la fabrication de structures de carcasse (2a) comprenant chacune au moins un pli de carcasse (3) ayant des bandes de jante d'extrémité (3a) en prise avec des structures annulaires d'ancrage (5) respectives ;
une ligne de fabrication de structure de sommet (14) conçue pour la fabrication de structures de sommet (7) comprenant chacune au moins une première couche de ceinture (8a), une seconde couche de ceinture (8b) et une bande de roulement (9) ;
un poste d'assemblage (15), dans laquelle chaque structure de sommet (7) est associée à l'une des structures de carcasse (2a) ;
**caractérisée en ce que** ladite ligne de fabrication de structure de sommet (14) comprend :
un premier tambour auxiliaire (22) ayant une forme variable entre une forme cylindrique définie par une surface de dépôt (22a) disposée radialement externe autour d'un axe de référence géométrique (X) et une forme toroïdale définie par une surface convexe (22b) qui s'étend radialement par rapport à ladite surface de dépôt (22a), dans laquelle ledit premier tambour auxiliaire (22) comprend des éléments de commutation (38) conçus pour modifier la forme du premier tambour auxiliaire (22) en passant de la forme cylindrique à la forme toroïdale, et vice versa, afin d'obtenir un ensemble annulaire façonné (A1) comprenant ladite première couche de ceinture (8a) radialement interne et ladite seconde couche de ceinture (8b) radialement externe, et dans laquelle ledit premier tambour auxiliaire (22) comprend des éléments de retournement (54) conçus pour exécuter une action de retournement pendant que ledit ensemble annulaire façonné (A1) est associé au premier tambour auxiliaire (22) afin d'obtenir un ensemble annulaire façonné et retourné (A2), ladite action de retournement comprenant le retournement de bandes de jante latérales (10) de la première couche de ceinture (8a), autour de bords latéraux (10b) respectifs de la seconde couche de ceinture (8b), superposées sur la seconde couche de ceinture (8b).

10. Installation (1) de fabrication de pneumatiques pour des roues de véhicule selon la revendication 9, dans laquelle ledit premier tambour auxiliaire (22) comprend des premiers secteurs (39) et des seconds secteurs (40) alternés circonférentiellement autour de l'axe de référence géométrique (X) et pouvant se déplacer entre des positions respectives radialement contractée et radialement étendue, dans laquelle chaque premier secteur (39) a une surface radialement externe (39a) ayant un profil rectiligne dans un plan radial par rapport à l'axe de référence géométrique (X) et dans laquelle chaque second secteur (40) a une surface radialement externe (40a) ayant un profil incurvé convexe dans un plan radial par rapport à l'axe de référence géométrique (X) ;
et dans laquelle lesdits éléments de commutation (38) sont conçus pour déplacer radialement lesdits premiers secteurs (39) et lesdits seconds secteurs (40) dans des positions radiales respectives de telle sorte que l'ensemble des surfaces radialement externes (39a) desdits premiers secteurs (39) définisse ladite surface de dépôt (22a) et pour étendre radialement lesdits seconds secteurs (40) de telle sorte que l'ensemble des surfaces radialement externes (40a) desdits seconds secteurs (40) définisse ladite surface convexe (22b) radialement étendue.

11. Installation (1) de fabrication de pneumatiques pour des roues de véhicule selon la revendication 9 ou 10, dans laquelle ledit premier tambour auxiliaire (22) comprend une partie centrale (53) étendue axialement sur une première section (L) et deux éléments de retournement (54) respectivement disposés au niveau d'extrémités axialement opposées de la partie centrale (53).

12. Installation (1) de fabrication de pneumatiques pour des roues de véhicule selon l'une ou plusieurs des revendications 9 à 11, dans laquelle un second tambour auxiliaire (31) est prévu, définissant une surface radialement externe (31a) disposée autour d'un axe de référence géométrique (X1) et ayant un profil incurvé convexe.

13. Installation (1) de fabrication de pneumatiques pour des roues de véhicule selon l'une ou plusieurs des revendications 9 à 12, dans laquelle des premiers dispositifs de fabrication (26) sont prévus, conçus pour la fabrication, sur ladite surface de dépôt (22a) du premier tambour auxiliaire (22), d'un ensemble annulaire (A) comprenant au moins ladite première couche de ceinture (8a) radialement interne ayant une première largeur (L1) et ladite seconde couche de ceinture (8b) radialement externe ayant une seconde largeur (L2) inférieure à la première largeur (L1) de la première couche de ceinture (8a).

14. Installation (1) de fabrication de pneumatiques pour des roues de véhicule selon l'une ou plusieurs des revendications 9 à 13, dans laquelle des seconds dispositifs de fabrication (35) sont prévus, conçus pour appliquer au moins la bande de roulement (9) autour de la structure de sommet en cours de traitement (7a) associée au second tambour auxiliaire (31).

15. Installation (1) de fabrication de pneumatiques pour des roues de véhicule selon la revendication 12, dans laquelle des dispositifs de transfert (34) sont prévus, conçus pour transférer, à partir du premier tambour auxiliaire (22) vers le second tambour auxiliaire (31), une structure de sommet en cours de traitement (7a) qui comprend un ensemble annulaire façonné et retourné (A2) et pour disposer ladite structure de sommet en cours de traitement (7a) coaxialement autour du second tambour auxiliaire (31), dans laquelle lesdits dispositifs de transfert (34) comprennent un anneau de préhension (56) comprenant des secteurs circulaires (57) qui sont répartis circonférentiellement et conçus pour entourer extérieurement ladite structure de sommet en cours de traitement (7a), dans laquelle lesdits secteurs circulaires (57) comprennent des éléments d'attraction conçus pour exercer, sur une surface radialement externe de la structure de sommet en cours de traitement (7a), une force d'attraction vers des secteurs circulaires eux-mêmes et dans laquelle ledit anneau de préhension (56) est disposé dans un poste de transfert fixe (33).
